# EUROPEAN PATENT APPLICATION

(11) **EP 4 446 488 A1**
(43) Date of publication of application: **16.10.2024**
(21) Application number: 22904160.3
(22) Date of filing: 02.12.2022
(51) Int. Cl.: D06C 7/00, D01F 6/62, D04H 3/011, D04H 3/16

(54) **MELT-BLOWN NONWOVEN FABRIC AND METHOD FOR MANUFACTURING SAME**

(30) Priority: 06.12.2021 JP 2021197924
(71) Applicant: Kaneka Corporation, Osaka-shi, Osaka 530-8288 (JP)
(72) Inventor: OTANI, Shunsuke, Osaka 566-0072 (JP); MIYAMOTO, Takayuki, Osaka 566-0072 (JP); YAJIMA, Kentaro, Osaka 566-0072 (JP)
(74) Representative: Vossius & Partner Patentanwälte Rechtsanwälte mbB
(86) International application number: PCT/JP2022/044568
(87) International publication number: WO 2023/106231

(57) **Abstract**

The present invention provides a method of producing a melt-blown nonwoven fabric, the method making it possible to increase the stretchability of a melt-blown nonwoven fabric formed from fibers containing a poly(3-hydroxyalkanoate)-based resin, as well as to suppress thermal contraction of the melt-blown nonwoven fabric. The present invention is a method of producing a melt-blown nonwoven fabric, the method including obtaining a second melt-blown nonwoven fabric by heating a first melt-blown nonwoven fabric. The first melt-blown nonwoven fabric is formed from a resin composition containing a poly(3-hydroxyalkanoate)-based resin. The step of obtaining the second melt-blown nonwoven fabric includes heating the first melt-blown nonwoven fabric within a temperature range higher than or equal to a temperature that is lower by 10°C than an endothermic start temperature of the resin composition in differential scanning calorimetry, the temperature range being lower than or equal to a temperature that is lower by 10°C than a melting point of the resin composition.

## Description

### Technical Field

The present invention relates to a melt-blown nonwoven fabric and a method of producing the same.

### Background Art

A melt-blown nonwoven fabric is a nonwoven fabric obtained by melt-blown technique, in which a polymer and hot gas are discharged together from a spinneret. The melt-blown nonwoven fabric has a microporous structure.

For instance, the melt-blown nonwoven fabric is used as a material of, for example, a removal filter to remove particles (e.g., particles to which viruses or the like are attached, pollen, etc.) or a blood filter to filter out blood cells (the removal filter herein is a concept encompassing, for example, a filter for a face mask).

In light of reducing the load on the global environment, a fiber containing a poly(3-hydroxyalkanoate)-based resin, which is a biodegradable resin, is used as a fiber of the melt-blown nonwoven fabric (see Patent Literature 1, for example).

### Citation List

### Patent Literature

PTL 1: WO 2019/142920

### Summary of Invention

### Technical Problem

To obtain a product from a melt-blown nonwoven fabric that is formed from fibers containing a poly(3-hydroxyalkanoate)-based resin, the melt-blown nonwoven fabric is processed. During the melt-blown nonwoven fabric being processed, there is a case where the melt-blown nonwoven fabric breaks.

In order to make the melt-blown nonwoven fabric less likely to break, desirably, the melt-blown nonwoven fabric has high stretchability.

The inventors of the present invention conduced diligent studies, and as a result of the studies, they have found that by heating a melt-blown nonwoven fabric formed from fibers containing a poly(3-hydroxyalkanoate)-based resin, the stretchability of the melt-blown nonwoven fabric is increased.

However, as a result of their further studies, the inventors have found a problem that there is a case where thermal contraction of the melt-blown nonwoven fabric occurs as a result of heating the melt-blown nonwoven fabric.

In view of the above, a first problem to be solved by the present invention is to provide a method of producing a melt-blown nonwoven fabric, the method making it possible to increase the stretchability of a melt-blown nonwoven fabric formed from fibers containing a poly(3-hydroxyalkanoate)-based resin, as well as to suppress thermal contraction of the melt-blown nonwoven fabric. A second problem to be solved by the present invention is to provide a melt-blown nonwoven fabric formed from fibers containing a poly(3-hydroxyalkanoate)-based resin, the melt-blown nonwoven fabric having high stretchability and less thermal contraction.

### Solution to Problem

As a result of diligent studies by the inventors of the present invention, they have found that by heating a melt-blown nonwoven fabric formed from fibers containing a poly(3-hydroxyalkanoate)-based resin within a predetermined temperature range, the thermal contraction of the melt-blown nonwoven fabric can be suppressed while increasing the stretchability of the melt-blown nonwoven fabric. Based on this finding, they have arrived at the present invention.

Specifically, a first aspect of the present invention relates to a method of producing a melt-blown nonwoven fabric, the method comprising obtaining a second melt-blown nonwoven fabric by heating a first melt-blown nonwoven fabric. The first melt-blown nonwoven fabric is formed from a resin composition containing a poly(3-hydroxyalkanoate)-based resin. The step of obtaining the second melt-blown nonwoven fabric includes heating the first melt-blown nonwoven fabric within a temperature range higher than or equal to a temperature that is lower by 10°C than an endothermic start temperature of the resin composition in differential scanning calorimetry, the temperature range being lower than or equal to a temperature that is lower by 10°C than a melting point of the resin composition.

Preferably, in the step of obtaining the second melt-blown nonwoven fabric, the melt-blown nonwoven fabric is heated within the temperature range in a non-contact manner.

Preferably, in the step of obtaining the second melt-blown nonwoven fabric, the first melt-blown nonwoven fabric is heated within the temperature range for 2 to 300 minutes.

Preferably, the poly(3-hydroxyalkanoate)-based resin includes a homopolymer and/or a copolymer, and includes 80% by mole or more of 3-hydroxybutyrate as a structural unit.

Preferably, a tensile elongation at maximum load of the second melt-blown nonwoven fabric in a MD direction is higher than a tensile elongation at maximum load of the first melt-blown nonwoven fabric in the MD direction; and a tensile elongation at maximum load of the second melt-blown nonwoven fabric in a CD direction is higher than a tensile elongation at maximum load of the first melt-blown nonwoven fabric in the CD direction.

Preferably, a DSC curve of the first melt-blown nonwoven fabric includes two or more endothermic peaks; a DSC curve of the second melt-blown nonwoven fabric includes two or more endothermic peaks; and in a case where, on each DSC curve, among peak tops of the respective endothermic peaks, a second highest peak top is defined as a second peak top, a height of the second peak top of the second melt-blown nonwoven fabric is greater than a height of the second peak top of the first melt-blown nonwoven fabric.

A second aspect of the present invention relates to a melt-blown nonwoven fabric formed from fibers. The fibers contain a poly(3-hydroxyalkanoate)-based resin. A DSC curve of the melt-blown nonwoven fabric includes two or more endothermic peaks. In a case where, among peak tops of the respective endothermic peaks, a highest peak top is defined as a first peak top and a second highest peak top is defined as a second peak top, a ratio of a height of the second peak top to a height of the first peak top is greater than or equal to 0.57.

### Advantageous Effects of Invention

The present invention makes it possible to provide a method of producing a melt-blown nonwoven fabric, the method making it possible to increase the stretchability of a melt-blown nonwoven fabric formed from fibers containing a poly(3-hydroxyalkanoate)-based resin, as well as to suppress thermal contraction of the melt-blown nonwoven fabric.

The present invention also makes it possible to provide a melt-blown nonwoven fabric formed from fibers containing a poly(3-hydroxyalkanoate)-based resin, the melt-blown nonwoven fabric having high stretchability and less thermal contraction.

### Brief Description of Drawings

FIG. 1 is a schematic diagram showing a melt-blown nonwoven fabric producing apparatus.
FIG. 2 is a schematic perspective view of a nozzle.
FIG. 3 is a schematic sectional view of a nozzle hole and a conveyor belt.
FIG. 4 shows a DSC curve of a resin composition of a first melt-blown nonwoven fabric used in Example 1.

### Description of Embodiments

Hereinafter, one embodiment of the present invention is described with reference to the accompanying drawings.

A method of producing a melt-blown nonwoven fabric according to the present embodiment includes a step of obtaining a second melt-blown nonwoven fabric by heating a first melt-blown nonwoven fabric.

The first melt-blown nonwoven fabric is formed from a resin composition containing a poly(3-hydroxyalkanoate)-based resin.

The above step of obtaining the second melt-blown nonwoven fabric includes heating the first melt-blown nonwoven fabric within a temperature range higher than or equal to a temperature that is lower by 10°C than the endothermic start temperature of the resin composition in differential scanning calorimetry, the temperature range being lower than or equal to a temperature that is lower by 10°C than the melting point of the resin composition.

In the method of producing a melt-blown nonwoven fabric according to the present embodiment, since the first melt-blown nonwoven fabric is heated within the temperature range higher than or equal to the temperature that is lower by 10°C than the endothermic start temperature of the resin composition in differential scanning calorimetry, the temperature range being lower than or equal to the temperature that is lower by 10°C than the melting point of the resin composition, thermal contraction of the melt-blown nonwoven fabric can be suppressed while increasing the stretchability of the melt-blown nonwoven fabric.

The reason why the stretchability of the melt-blown nonwoven fabric is increased as a result of the heating within the temperature range is considered that, in the first melt-blown nonwoven fabric, the resin crystal partly melts and thereby orientation relaxation of the resin composition occurs.

Since the first melt-blown nonwoven fabric is heated at a temperature that is lower by 10°C or more than the melting point of the first melt-blown nonwoven fabric, thermal contraction of the melt-blown nonwoven fabric is suppressed during the heating in the above step.

Since the stretchability of the melt-blown nonwoven fabric is increased, for example, at the time of processing the second melt-blown nonwoven fabric, the second melt-blown nonwoven fabric will not break easily.

Further, in the method of producing a melt-blown nonwoven fabric according to the present embodiment, as a result of the first melt-blown nonwoven fabric being heated within the above temperature range, crystallization of the resin in the melt-blown nonwoven fabric is facilitated, which consequently increases thermal resistance.

Still further, in the method of producing a melt-blown nonwoven fabric according to the present embodiment, as a result of the first melt-blown nonwoven fabric being heated, the fibers therein are partly fused to each other, and consequently, fluffing of the second melt-blown nonwoven fabric can be suppressed, which is advantageous.

It should be noted that the aforementioned differential scanning calorimetry (DSC) is a method that accords with JIS K7122 (1987) "Testing Methods for Heat of Transitions of Plastics".

For example, the differential scanning calorimetry can be performed under the conditions indicated below.
Apparatus: Differential scanning calorimeter DSC6200 available from Seiko Instruments Inc.
Sample amount: 4 to 10 mg
Temperature range in the differential scanning calorimetry: 30°C to 200°C
Temperature rise rate: 10 °C/min

The endothermic start temperature of the resin composition can be determined in a manner described below.

First, a baseline is drawn on a DSC curve. Then, a temperature on the low-temperature side at which the DSC curve starts deviating from the baseline is defined as the endothermic start temperature.

It should be noted that the baseline can be drawn by extending substantially straight lines that are present on both sides of an endothermic peak.

On the DSC curve, the melting point of the resin composition is defined as a temperature at which the endothermic energy amount is maximum (i.e., the apex of the endothermic peak).

The method of producing a melt-blown nonwoven fabric according to the present embodiment includes: a step (1) of obtaining the first melt-blown nonwoven fabric by melt-blown technique; and a step (2) of obtaining the second melt-blown nonwoven fabric by heating the first melt-blown nonwoven fabric.

The first melt-blown nonwoven fabric is a nonwoven fabric obtained by melt-blown technique. The first melt-blown nonwoven fabric can be obtained in the step (1).

The first melt-blown nonwoven fabric includes fibers.

The fibers are formed from a resin composition containing a poly(3-hydroxyalkanoate)-based resin.

### <Step (1)>

The step (1) is performed before the step (2).

In the step (1), the first melt-blown nonwoven fabric is obtained by melt-blown technique.

The step (1) includes: a step (A) of obtaining a molten product by heat-melting a raw material composition; and a step (B) of obtaining the first melt-blown nonwoven fabric from the molten product.

The raw material composition contains a polymer component. The raw material composition may further contain an additive.

The polymer component contains a poly(3-hydroxyalkanoate)-based resin.

The polymer component may contain another polymer in addition to the poly(3-hydroxyalkanoate)-based resin.

The poly(3-hydroxyalkanoate)-based resin is a polyester containing a 3-hydroxyalkanoic acid as a monomer.

Specifically, the poly(3-hydroxyalkanoate)-based resin is a resin including the 3-hydroxyalkanoic acid as a structural unit.

The poly(3-hydroxyalkanoate)-based resin is a biodegradable polymer.

It should be noted that being "biodegradable" in the present embodiment means being able to be decomposed into low molecular weight compounds by microorganisms in a natural environment. Being biodegradable or not can be determined based on tests suited for different environments. Specifically, for example, ISO 14855 (compost) and ISO 14851 (activated sludge) are suited for an aerobic condition, and ISO 14853 (aqueous phase) and ISO 15985 (solid phase) are suited for an anaerobic condition. Also, biodegradability by microorganisms in seawater can be evaluated by biochemical oxygen demand measurement.

The poly(3-hydroxyalkanoate)-based resin includes a homopolymer and/or a copolymer.

Preferably, the poly(3-hydroxyalkanoate)-based resin includes a structural unit expressed by an equation (1) shown below.

[-CHR-CH₂-CO-O-] (1)

(In the above equation (1), R is an alkyl group represented by CₚH₂ₚ₊₁, and p is an integer within the range of 1 to 15.)

Preferably, the poly(3-hydroxyalkanoate)-based resin includes a poly(3-hydroxybutyrate)-based resin.

It should be noted that the poly(3-hydroxybutyrate)-based resin is a resin including 3-hydroxybutyrate as a structural unit. The poly(3-hydroxybutyrate)-based resin may be a homopolymer, or may be a copolymer.

Examples of the poly(3-hydroxyalkanoate)-based resin including 3-hydroxybutyrate as a structural unit include P3HB, P3HB3HH, P3HB3HV, P3HB4HB, poly(3-hydroxybutyrate-co-3-hydroxyoctanoate), and poly(3-hydroxybutyrate-co-3-hydroxyoctadecanoate).

P3HB herein means poly(3-hydroxybutyrate), which is a homopolymer.

P3HB3HH herein means poly(3-hydroxybutyrate-co-3-hydroxyhexanoate).

P3HB3HV herein means poly(3-hydroxybutyrate-co-3-hydroxyvalerate).

P3HB4HB herein means poly(3-hydroxybutyrate-co-4-hydroxybutyrate).

It should be noted that P3HB has a function to facilitate crystallization of P3HB itself and crystallization of the poly(3-hydroxyalkanoate)-based resin other than P3HB. Accordingly, preferably, the poly(3-hydroxyalkanoate)-based resin includes P3HB.

In order to achieve both excellent biodegradability and excellent molding processability, the poly(3-hydroxyalkanoate)-based resin is preferably, but not particularly limited to, P3HB, P3HB3HH, P3HB3HV, or P3HB4HB.

Preferably, the poly(3-hydroxyalkanoate)-based resin is P3HB3HH.

The poly(3-hydroxyalkanoate)-based resin preferably includes 80% by mole or more of 3-hydroxybutyrate, or more preferably includes 85% by mole or more of 3-hydroxybutyrate, as a structural unit.

As a result of the poly(3-hydroxyalkanoate)-based resin including 80% by mole or more of 3-hydroxybutyrate as a structural unit, the stiffness of the fibers is increased.

Also, the poly(3-hydroxyalkanoate)-based resin preferably includes 99% by mole or less of 3-hydroxybutyrate, or more preferably includes 97% by mole or less of 3-hydroxybutyrate, as a structural unit.

As a result of the poly(3-hydroxyalkanoate)-based resin including 99% by mole or less of 3-hydroxybutyrate as a structural unit, the fibers have excellent flexibility.

The polymer component may include only one kind of the poly(3-hydroxyalkanoate)-based resin, or may include two or more kinds of the poly(3-hydroxyalkanoate)-based resins.

In a case where the poly(3-hydroxyalkanoate)-based resin includes a copolymer (e.g., P3HB3HH), the poly(3-hydroxyalkanoate)-based resin may include two or more kinds of copolymers having different average composition ratios of the structural unit.

The raw material composition preferably contains 50% by mass or more of the poly(3-hydroxyalkanoate)-based resin, more preferably contains 80% by mass or more thereof, and even more preferably contains 90% by mass or more thereof.

The aforementioned another polymer is preferably biodegradable.

Examples of this other polymer that is biodegradable include polycaprolactone, polylactic acid, polybutylene succinate, polybutylene succinate adipate, polybutylene adipate terephthalate, polyethylene succinate, polyvinyl alcohol, polyglycolic acid, unmodified starch, modified starch, cellulose acetate, and chitosan.

The polycaprolactone is a polymer obtained by ring-opening polymerization of ε-caprolactone.

The raw material composition may include one kind of this other polymer, or two or more kinds of these other polymers.

Thus, the raw material composition includes the biodegradable polymer(s). Therefore, even if the second melt-blown nonwoven fabric is discarded in an environment, since the second melt-blown nonwoven fabric is readily decomposed in the environment, the load on the environment can be reduced.

The raw material composition may further contain an additive.

Examples of the additive include a crystal nucleating agent, a lubricant, a stabilizer (such as an antioxidant or ultraviolet absorber), a colorant (such as a dye or pigment), a plasticizer, an inorganic filler, an organic filler, and an antistatic agent.

Preferably, the raw material composition contains a crystal nucleating agent as the additive.

The crystal nucleating agent is a compound that facilitates crystallization of the poly(3-hydroxyalkanoate)-based resin. The crystal nucleating agent has a melting point higher than that of the poly(3-hydroxyalkanoate)-based resin.

Since the raw material composition contains the crystal nucleating agent, at the time of fabrication of the first melt-blown nonwoven fabric by melt-blown technique, crystallization of the poly(3-hydroxyalkanoate)-based resin is facilitated, and the fibers that are adjacent to each other are not easily fused to each other. This consequently makes it possible to readily reduce the coefficient of variation of the fiber diameter of the fibers.

Examples of the crystal nucleating agent include: inorganic substances (e.g., boron nitride, titanium oxide, talc, layered silicate, calcium carbonate, sodium chloride, metal phosphate, etc.); sugar alcohol compounds derived from natural products (e.g., pentaerythritol, erythritol, galactitol, mannitol, arabitol, etc.); polyvinyl alcohol; chitin; chitosan; polyethylene oxides; aliphatic carboxylates; aliphatic alcohols; aliphatic carboxylic acid esters; dicarboxylic acid derivatives (e.g., dimethyl adipate, dibutyl adipate, di-isodecyl adipate, dibutyl sebacate, etc.); cyclic compounds having, in their molecule, C=O and a functional group selected from the group consisting of NH, S, and O (e.g., indigo, quinacridone, quinacridone magenta, etc.); sorbitol derivatives (e.g., bis-benzylidene sorbitol, bis(p-methylbenzylidene)sorbitol, etc.); compounds containing a nitrogen-containing heteroaromatic nucleus (e.g., pyridine ring, triazine ring, imidazole ring, etc.) (e.g., pyridine, triazine, imidazole, etc.); phosphate ester compounds; bisamides of higher fatty acids; metal salts of higher fatty acids; and branched polylactic acid.

It should be noted that P3HB, which is the poly(3-hydroxyalkanoate)-based resin, can be used as the crystal nucleating agent.

One of these crystal nucleating agents may be used alone, or two or more of these crystal nucleating agents may be used in combination.

As the crystal nucleating agent, sugar alcohol compounds, polyvinyl alcohol, chitin, and chitosan are preferable in light of the effect of improving the crystallization rate of the poly(3-hydroxyalkanoate)-based resin as well as in light of compatibility and affinity with the poly(3-hydroxyalkanoate)-based resin.

Among the sugar alcohol compounds, pentaerythritol is preferable.

The crystal nucleating agent preferably has a crystal structure at normal temperature (25°C).

Since the crystal nucleating agent has a crystal structure at normal temperature (25°C), the crystallization of the poly(3-hydroxyalkanoate)-based resin is further facilitated, which is advantageous.

The crystal nucleating agent that has a crystal structure at normal temperature (25°C) is preferably powdery at normal temperature (25°C).

The crystal nucleating agent that is powdery at normal temperature (25°C) preferably has a mean particle diameter of 10 µm or less.

The raw material composition contains the crystal nucleating agent in an amount of preferably 0.1 parts by mass or more, more preferably 0.3 parts by mass or more, and even more preferably 0.5 parts by mass or more, with respect to 100 parts by mass of the poly(3-hydroxyalkanoate)-based resin.

Since the raw material composition contains the crystal nucleating agent in an amount of 0.1 parts by mass or more with respect to 100 parts by mass of the poly(3-hydroxyalkanoate)-based resin, at the time of fabrication of the first melt-blown nonwoven fabric by melt-blown technique, the crystallization of the poly(3-hydroxyalkanoate)-based resin is even further facilitated, which is advantageous.

Also, the raw material composition contains the crystal nucleating agent in an amount of preferably 2.5 parts by mass or less, more preferably 0.3 parts by mass or more, and even more preferably 0.5 parts by mass or more, with respect to 100 parts by mass of the poly(3-hydroxyalkanoate)-based resin.

Since the raw material composition contains the crystal nucleating agent in an amount of 2.5 parts by mass or less with respect to 100 parts by mass of the poly(3-hydroxyalkanoate)-based resin, at the time of fabrication of the first melt-blown nonwoven fabric by melt-blown technique, the fibers can be readily obtained, which is advantageous.

It should be noted that P3HB is the poly(3-hydroxyalkanoate)-based resin, and can also function as the crystal nucleating agent. Therefore, in a case where the polymer composition contains P3HB, the amount of the P3HB is included in both the amount of the poly(3-hydroxyalkanoate)-based resin and the amount of the crystal nucleating agent.

The raw material composition preferably contains the lubricant.

As a result of the lubricant being included in the fibers, the slipperiness of the fibers at the time of fabrication of the first melt-blown nonwoven fabric by melt-blown technique is improved, which makes it possible to suppress the fibers from being fused to each other.

The lubricant is, for example, a compound having an amide bond.

The compound having an amide bond preferably includes at least one selected from the group consisting of lauric acid amide, myristic acid amide, stearic acid amide, behenic acid amide, and erucic acid amide.

The raw material composition contains the lubricant in an amount of preferably 0.05 parts by mass or more, more preferably 0.1 parts by mass or more, and even more preferably 0.5 parts by mass or more, with respect to 100 parts by mass of the polymer component. Since the raw material composition contains the lubricant in an amount of 0.05 parts by mass or more with respect to 100 parts by mass of the polymer component, at the time of fabrication of the first melt-blown nonwoven fabric by melt-blown technique, the fibers can be further suppressed from being fused to each other, which is advantageous.

Also, the raw material composition contains the lubricant in an amount of preferably 12 parts by mass or less, more preferably 10 parts by mass or less, even more preferably 8 parts by mass or less, and most preferably 5 parts by mass or less, with respect to 100 parts by mass of the polymer component. Since the raw material composition contains the lubricant in an amount of 12 parts by mass or less with respect to 100 parts by mass of the polymer component, the lubricant can be suppressed from bleeding out on the surface of the fibers, which is advantageous.

Preferably, the melt mass-flow rate of the raw material composition at 160°C is 50 to 1000 g/10min, and/or the weight-average molecular weight of the raw material composition is 100000 to 250000.

More preferably, the melt mass-flow rate of the raw material composition at 160°C is 90 to 700 g/10min, and/or the weight-average molecular weight of the raw material composition is 120000 to 200000.

As a result of the melt mass-flow rate of the raw material composition at 160°C being less than or equal to 1000 g/10min, or as a result of the weight-average molecular weight of the raw material composition being greater than or equal to 100000, the strength and stretchability of the first melt-blown nonwoven fabric are further increased. Consequently, the strength and stretchability of the second melt-blown nonwoven fabric are further increased.

As a result of the melt mass-flow rate of the raw material composition at 160°C being greater than or equal to 50 g/l Omin, or as a result of the weight-average molecular weight of the raw material composition being less than or equal to 250000, the viscosity of the molten product during the fabrication of the first melt-blown nonwoven fabric can be readily increased. This makes it possible to readily draw the molten product and to readily reduce the fiber diameter of the fibers in the second melt-blown nonwoven fabric. Consequently, the particle filtration efficiency of the second melt-blown nonwoven fabric is further increased.

The melt mass-flow rate (MFR) of the raw material composition at 160°C is more preferably 100 to 700 g/10min, and even more preferably 100 to 650 g/10min.

It should be noted that the melt mass-flow rate (MFR) of the raw material composition at 160°C is determined in the following manner: determining the melt volume-flow rate (MVR) of the raw material composition at 160°C in accordance with the method B of ASTM-D1238 (ISO1133-1, JIS K7210-1:2011); and then determining the melt mass-flow rate (MFR) of the raw material composition at 160°C from the determined melt volume-flow rate (MVR) of the raw material composition at 160°C and the density of the raw material composition.

Here, the melt volume-flow rate (MVR) of the raw material composition at 160°C is measured in the following manner: heating 5 g or more of the raw material composition at 160°C for four minutes; and then measuring the melt volume-flow rate (MVR) of the raw material composition while applying a load of 5 kg onto the heated resin composition.

The weight-average molecular weight of the raw material composition is more preferably 130000 to 190000.

It should be noted that the weight-average molecular weight in the present embodiment is measured based on a molecular weight distribution in terms of polystyrene by using gel permeation chromatography (GPC) using a chloroform eluent. A column used in the GPC may be any column suitable for measuring the molecular weight.

In the step (1), the first melt-blown nonwoven fabric is obtained from the raw material composition by using a melt-blown nonwoven fabric producing apparatus.

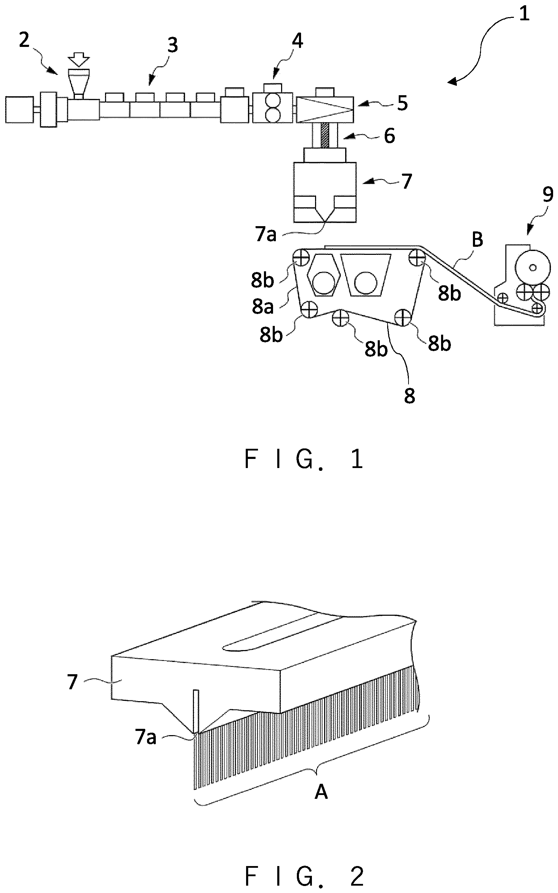

As shown in FIG. 1, the aforementioned melt-blown nonwoven fabric producing apparatus 1 includes: an extruder 3, which melts the raw material composition to obtain the molten product; a hopper 2, which feeds the raw material composition to the extruder 3; a kneader 6, which kneads the molten product to obtain the molten product in a kneaded state (which may be hereinafter referred to as "molten kneaded product"); a nozzle 7, which discharges the molten kneaded product in a fibrous form; a collector 8, which collects and cools the fibrous molten kneaded product to obtain a first melt-blown nonwoven fabric B; and a winder 9, which winds the first melt-blown nonwoven fabric B

The melt-blown nonwoven fabric producing apparatus 1 may, as necessary, further include a gear pump 4, which feeds the molten product to the kneader 6.

As a result of the melt-blown nonwoven fabric producing apparatus 1 including the gear pump 4, the amount of the molten product fed to the kneader 6 can be suppressed from varying.

The melt-blown nonwoven fabric producing apparatus 1 may, as necessary, further include a filter 5, which removes extraneous matter from the molten product at a position upstream of the kneader 6.

In the step (A), the raw material composition is fed via the hopper 2 to the extruder 3, which melts the raw material composition, and thereby the molten product is obtained.

The raw material composition fed to the extruder 3 is preferably solid, and more preferably in the form of pellets.

Preferably, before being fed to the extruder 3, the raw material composition has been heated and dried in light of suppressing hydrolysis of the resin of the raw material composition and suppressing oxidation degradation of the resin of the raw material composition.

The amount of water in the raw material composition fed to the extruder 3 is preferably less than or equal to 200 ppmw.

At the time of drying the raw material composition, preferably, oxygen is removed from the atmosphere and from the raw material composition. At the time of the drying, the atmosphere is preferably an inert gas (e.g., nitrogen gas) atmosphere.

In the step (A), the drying of the raw material composition may be performed before the raw material composition is fed to the hopper 2. Alternatively, the hopper 2 may be a hopper dryer, and the drying of the raw material composition may be performed by the hopper 2.

Examples of the extruder 3 include a single screw extruder, a co-rotating intermeshing twin screw extruder, a co-rotating non-intermeshing twin screw extruder, a counterrotating non-intermeshing twin screw extruder, and a multiple screw extruder.

The extruder 3 is preferably a single screw extruder for the following reasons: in the case of a single screw extruder, thermal degradation of the resin during the extrusion can be readily suppressed since less resin stagnation occurs in a single screw extruder; and also, the equipment cost of a single screw extruder is less than that of the other types of extruders.

In the step (A), the molten product is fed via the filter 5 to the kneader 6 by the gear pump 4, and the molten product is kneaded by the kneader 6 to obtain the molten kneaded product.

The filter 5 is, for example, a screen mesh, a pleats filter, or a leaf disc filter.

The filter 5 is preferably a leaf disc filter in light of filtration accuracy, filtration area, and pressure resistance performance as well as for the reason that clogging due to extraneous matter is less likely to occur in the case of a leaf disc filter.

For example, a metal fiber sintered nonwoven fabric may be used as a filtering medium of the filter 5.

In the step (B), the molten kneaded product as the molten product is discharged in a fibrous form from the nozzle 7.

The nozzle 7 is a spinning die head.

The nozzle 7 includes a plurality of nozzle holes 7a, each of which discharges the molten kneaded product in a fibrous form. As shown in FIG. 2, the nozzle 7 discharges a plurality of fibrous molten kneaded products A.

The plurality of nozzle holes 7a are open downward.

The shape of the opening of each nozzle hole 7a is, for example, a circular shape (a concept encompassing a circle shape, an approximately circle shape, an ellipse shape, and an approximately ellipse shape).

The diameter of the opening is suitably selected in accordance with the fiber diameter of each fiber in the first melt-blown nonwoven fabric.

The diameter of the opening is preferably greater than or equal to 0.05 mm, more preferably greater than or equal to 0.10 mm, and even more preferably greater than or equal to 0.15 mm.

Also, the diameter of the opening is preferably less than or equal to 1.0 mm, more preferably less than or equal to 0.50 mm, and even more preferably less than or equal to 0.30 mm.

The plurality of nozzle holes 7a of the nozzle 7 are spaced apart from each other and arranged in a line.

The distance between the nozzle holes 7a that are adjacent to each other (hereinafter, this distance is also referred to as "space") is, for example, preferably greater than or equal to 0.05 mm, more preferably greater than or equal to 0.1 mm, and even more preferably greater than or equal to 0.25 mm.

Since the distance (space) between the nozzle holes 7a that are adjacent to each other is greater than or equal to 0.05 mm, the fibers that are adjacent to each other can be suppressed from being fused to each other. This consequently makes it possible to reduce the coefficient of variation of the fiber diameter of the fibers.

Also, the distance (space) between the nozzle holes 7a that are adjacent to each other is, for example, preferably less than or equal to 1.0 mm, more preferably less than or equal to 0.7 mm, and even more preferably less than or equal to 0.5 mm.

The distances between the nozzle holes 7a that are adjacent to each other may be equal to each other or unequal to each other. However, preferably, the distances between the nozzle holes 7a that are adjacent to each other are equal to each other, because, in this case, the first melt-blown nonwoven fabric having uniform quality can be readily produced.

The collector 8 includes a collecting surface to collect the fibrous kneaded products A.

The collector 8 is a conveyor.

The conveyor includes: a conveyor belt 8a including the collecting surface; and a plurality of rollers 8b to drive the conveyor belt 8a.

The collecting surface is positioned immediately below the nozzle holes 7a.

The conveyor belt 8a has air permeability. Specifically, the conveyor belt 8a is formed from a net-like material. That is, the collecting surface is a net-like surface.

It should be noted that the collector 8 may be configured differently, so long as the collector 8 includes a collecting unit. For example, the collector 8 may include a collecting drum or a collecting net instead of the conveyor.

The distance between the collecting surface and the nozzle holes 7a (this distance is hereinafter also referred to as "DCD") is preferably greater than or equal to 20 mm, more preferably greater than or equal to 50 mm, and even more preferably greater than or equal to 80 mm.

Also, the distance (DCD) between the conveyor belt 8a as the collecting unit and the nozzle holes 7a is preferably less than or equal to 250 mm.

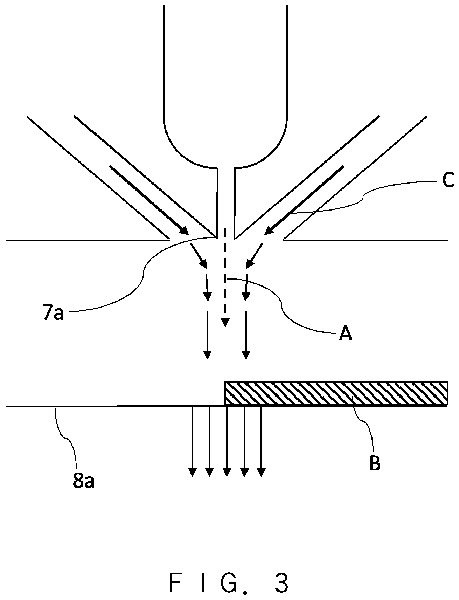

As shown FIG. 3, the melt-blown nonwoven fabric producing apparatus 1 is configured to apply high-temperature gas C to the fibrous molten kneaded products A to draw the fibrous molten kneaded products A.

In the step (B), the high-temperature gas C is applied to the fibrous molten kneaded products A, and the high-temperature gas C that has been applied to the molten kneaded products A is passed through the net-like conveyor belt 8a.

In the step (B), to facilitate the passing of the high-temperature gas C that has been applied to the molten kneaded products A through the net-like conveyor belt 8a, the high-temperature gas C is preferably sucked by a suction device (not shown). This makes it possible to prevent the fibers from rebounding on the collecting surface of the net-like conveyor belt 8a. Consequently, the first melt-blown nonwoven fabric B in which the fibers are favorably fused to each other can be readily formed.

Further, in the step (B), the fibrous molten kneaded products A that have been drawn are collected by the conveyor belt 8a, then cooled while being transported by the conveyor belt 8a, and thereby the first melt-blown nonwoven fabric is obtained.

The material that forms the net-like collecting surface is not particularly limited, so long as the material has thermal resistance against the temperature conditions in the production of the first melt-blown nonwoven fabric B, will not be excessively fused to the first melt-blown nonwoven fabric B, and allows the melt-blown nonwoven fabric B to be detached from the material.

The gas C is, for example, air or inert gas (e.g., nitrogen gas).

Examples of a method of applying the high-temperature gas C include a method in which the gas C that has been pressurized by a compressor (not shown) is heated by a heater (not shown).

The flow rate of the high-temperature gas C applied to the fibrous molten kneaded products A is preferably greater than or equal to 5000 NL/min/m, more preferably greater than or equal to 5500 NL/min/m, and even more preferably less than or equal to 11000 NL/min/m.

Also, the flow rate of the high-temperature gas C applied to the fibrous molten kneaded products A is preferably less than or equal to 12000 NL/min/m, and more preferably less than or equal to 10000 NL/min/m.

In the step (B), the temperature and flow rate of the high-temperature gas C are suitably controlled to obtain the first melt-blown nonwoven fabric with high crystallization.

A moving speed at which the first melt-blown nonwoven fabric B is moved on the conveyor belt 8a (i.e., the moving speed of the conveyor belt 8a) is suitably set in consideration of the apparent density of the obtained melt-blown nonwoven fabric B while taking into account the discharge amount of the resin.

The moving speed is preferably within the range of greater than or equal to 1.0 m/min and less than or equal to 6.0 m/min.

In the step (B), the first melt-blown nonwoven fabric B is transported to the winder 9 by the conveyor belt 8a, and the first melt-blown nonwoven fabric B is wound into a roll by the winder 9.

### <First Melt-Blown Nonwoven Fabric>

The first melt-blown nonwoven fabric includes fibers.

The fibers are formed from a resin composition containing a poly(3-hydroxyalkanoate)-based resin.

The resin composition contains a polymer component. The resin composition may further contain an additive.

In the first melt-blown nonwoven fabric, preferably, the melt mass-flow rate (MFR) of the resin composition at 160°C is 50 to 1000 g/l Omin, and/or the weight-average molecular weight of the resin composition is 100000 to 250000.

In the first melt-blown nonwoven fabric, more preferably, the melt mass-flow rate (MFR) of the resin composition at 160°C is 90 to 700 g/l Omin, and/or the weight-average molecular weight of the resin composition is 120000 to 200000.

As a result of the melt mass-flow rate of the resin composition at 160°C being less than or equal to 1000 g/l Omin, or as a result of the weight-average molecular weight of the resin composition being greater than or equal to 100000, the strength and stretchability of the first melt-blown nonwoven fabric are increased. Consequently, the strength and stretchability of the second melt-blown nonwoven fabric can be readily increased.

As a result of the melt mass-flow rate of the resin composition at 160°C being greater than or equal to 50 g/10min, or as a result of the weight-average molecular weight of the resin composition being less than or equal to 250000, the viscosity of the molten product during the fabrication of the first melt-blown nonwoven fabric can be readily increased. This makes it possible to readily draw the molten product and to readily reduce the fiber diameter of the fibers in the first melt-blown nonwoven fabric. Consequently, the fiber diameter of the fibers in the second melt-blown nonwoven fabric can also be readily reduced, and the particle filtration efficiency of the second melt-blown nonwoven fabric can be readily increased.

The melt mass-flow rate (MFR) of the resin composition at 160°C is more preferably 100 to 700 g/10min, and even more preferably 200 to 650 g/10min.

It should be noted that the melt mass-flow rate (MFR) of the resin composition at 160°C is determined in the following manner: determining the melt volume-flow rate (MVR) of the resin composition at 160°C in accordance with the method B ofASTM-D1238 (ISO1133-1, JIS K7210-1:2011); and then determining the melt mass-flow rate (MFR) of the resin composition at 160°C from the determined melt volume-flow rate (MVR) of the resin composition at 160°C and the density of the resin composition.

Here, the melt volume-flow rate (MVR) of the resin composition at 160°C is measured in the following manner: heating 5 g or more of the resin composition at 160°C for four minutes; and then measuring the melt volume-flow rate (MVR) of the resin composition while applying a load of 5 kg onto the heated resin composition.

The weight-average molecular weight of the resin composition is more preferably 130000 to 190000.

The average value of the fiber diameter of the fibers in the first melt-blown nonwoven fabric is preferably 1.0 to 5.0 µm, more preferably 1.7 to 3.0 µm, and even more preferably 2.0 to 2.9 µm.

The coefficient of variation of the fiber diameter of the fibers in the first melt-blown nonwoven fabric is preferably less than or equal to 0.40, more preferably less than or equal to 0.36, and even more preferably less than or equal to 0.35. Also, the coefficient of variation of the fiber diameter of the fibers in the first melt-blown nonwoven fabric is, for example, greater than or equal to 0.10.

As a result of the average value of the fiber diameter of the fibers in the first melt-blown nonwoven fabric being less than or equal to 5.0 µm, the average value of the fiber diameter of the fibers in the second melt-blown nonwoven fabric can be readily reduced, which makes it possible to readily increase the particle filtration efficiency of the second melt-blown nonwoven fabric.

As a result of the average value of the fiber diameter of the fibers in the first melt-blown nonwoven fabric being greater than or equal to 1.0 µm, the average value of the fiber diameter of the fibers in the second melt-blown nonwoven fabric can be readily increased, which makes it possible to readily increase the strength and stretchability of the second melt-blown nonwoven fabric.

As a result of the coefficient of variation of the fiber diameter of the fibers in the first melt-blown nonwoven fabric being less than or equal to 0.40, excessively thick fibers can be readily reduced in the second melt-blown nonwoven fabric, and consequently, the particle filtration efficiency of the second melt-blown nonwoven fabric can be readily increased. Also, as a result of the coefficient of variation of the fiber diameter of the fibers in the first melt-blown nonwoven fabric being less than or equal to 0.40, excessively thin fibers can be readily reduced in the second melt-blown nonwoven fabric, and consequently, the strength and stretchability of the second melt-blown nonwoven fabric can be readily increased.

It should be noted that the average value and the coefficient of variation of the fiber diameter of the fibers in the first melt-blown nonwoven fabric can be determined in a manner described below.

First a test piece is obtained from the first melt-blown nonwoven fabric.

Next, photographs (magnification: 1700x) of the surface of the test piece at five different locations on the surface of the test piece are taken by a scanning electron microscope.

Then, 20 or more fibers are randomly selected in each photograph, and the diameter (width) of each of the selected fibers is measured.

Next, based on the measured diameter (width) values of all the selected fibers, an arithmetic average value and a coefficient of variation (= standard deviation / arithmetic average value) are determined.

The areal weight of the first melt-blown nonwoven fabric is preferably 10 to 100 g/m², more preferably 20 to 80 g/m², even more preferably 25 to 77 g/m², and particularly preferably 30 to 75 g/m².

As a result of the areal weight of the first melt-blown nonwoven fabric being greater than or equal to 10 g/m², the areal weight of the second melt-blown nonwoven fabric can be readily increased, and consequently, the strength and stretchability of the second melt-blown nonwoven fabric are increased as well as the particle filtration efficiency of the second melt-blown nonwoven fabric is increased.

Also, as a result of the areal weight of the first melt-blown nonwoven fabric being less than or equal to 100 g/m², the areal weight of the second melt-blown nonwoven fabric is reduced, and the solution permeability (e.g., water permeability) or air permeability of the second melt-blown nonwoven fabric can be increased.

It should be noted that the areal weight of the first melt-blown nonwoven fabric can be determined in a manner described below.

First a test piece is obtained from the first melt-blown nonwoven fabric.

The size of the test piece may be, for example, 100 mm × 100 mm or 200 mm × 200 mm.

Next, the weight of the test piece is measured by an electronic balance or the like.

Then, the measured weight of the test piece is divided by the area of the test piece to calculate the areal weight.

The thickness of the first melt-blown nonwoven fabric is preferably 0.10 to 0.40 mm, and more preferably 0.18 to 0.33 mm.

As a result of the thickness of the first melt-blown nonwoven fabric being 0.10 to 0.40 mm, the first melt-blown nonwoven fabric having uniform quality can be readily obtained at the time of fabrication of the first melt-blown nonwoven fabric. Consequently, the second melt-blown nonwoven fabric having uniform quality can be readily obtained.

Further, as a result of the thickness of the first melt-blown nonwoven fabric being greater than or equal to 0.10 mm, the thickness of the second melt-blown nonwoven fabric can be readily increased. Consequently, the strength and stretchability of the second melt-blown nonwoven fabric can be readily increased, and the particle filtration efficiency of the second melt-blown nonwoven fabric can be readily increased.

Still further, as a result of the thickness of the first melt-blown nonwoven fabric being less than or equal to 0.40 mm, the thickness of the second melt-blown nonwoven fabric can be readily reduced, and the solution permeability (e.g., water permeability) or air permeability of the second melt-blown nonwoven fabric can be readily increased.

It should be noted that the thickness of each melt-blown nonwoven fabric herein can be determined in the following manner: measuring the thickness of the melt-blown nonwoven fabric at three or more locations thereon by a thickness gauge; and then determining the arithmetic average value thereof as the thickness of the melt-blown nonwoven fabric.

The thickness gauge used herein is, for example, "PEACOCK" available from OZAKI MFG. CO., LTD.

The average pore diameter of the first melt-blown nonwoven fabric is preferably greater than or equal to 2.5 µm and less than or equal to 10.0 µm, and more preferably greater than or equal to 3.0 µm and less than or equal to 7.0 µm.

As a result of the average pore diameter of the first melt-blown nonwoven fabric being greater than or equal to 2.5 µm, the average pore diameter of the second melt-blown nonwoven fabric can be readily increased, and the solution permeability (e.g., water permeability) or air permeability of the second melt-blown nonwoven fabric can be readily increased.

As a result of the average pore diameter of the first melt-blown nonwoven fabric being less than or equal to 7.0 µm, the average pore diameter of the second melt-blown nonwoven fabric can be readily reduced, and the particle filtration efficiency of the second melt-blown nonwoven fabric can be readily increased.

The average pore diameter of each melt-blown nonwoven fabric herein is a mean flow pore diameter determined in accordance with JIS K3832-1990 "Testing methods for bubble point of membrane filters".

The mean flow pore diameter can be measured by using, for example, Penn-Porometer (available from Porous Materials, Inc.).

The tensile strength of the first melt-blown nonwoven fabric in a MD direction is preferably greater than or equal to 2.0 N/m² and less than or equal to 15.0 N/m², and more preferably greater than or equal to 3.0 N/m² and less than or equal to 10.0 N/m².

The tensile strength of the first melt-blown nonwoven fabric in a CD direction is preferably greater than or equal to 2.0 N/m² and less than or equal to 8.0 N/m², and more preferably greater than or equal to 2.5 N/m² and less than or equal to 6.0 N/m².

The MD direction herein means the direction (Machine Direction) in which the first melt-blown nonwoven fabric moves during the production of the first melt-blown nonwoven fabric by melt-blown technique.

The CD direction herein means the direction perpendicular to the MD direction.

It should be noted that the tensile strength can be measured by using a constant rate extension type tensile test machine that accords with JIS B7721:2018 "Tension/compression testing machines - Calibration and verification of the force-measuring system". It should be noted that the constant rate extension type tensile test machine used herein may be, for example, a universal tester (RTG-1210 available from A&D Company, Limited).

Specifically, the tensile strength can be determined in a manner described below.

First, a test piece (width: 8 mm, length: 40 mm) is cut out from the first melt-blown nonwoven fabric.

Next, the test piece with an initial load applied thereto is attached to the tensile test machine, i.e., gripped by grips of the tensile test machine, with the length of the test piece between the grips being 20 mm. Here, the initial load is applied to the test piece by pulling the test piece by hand to such an extent that sagging does not occur.

Then, a load is applied to the test piece at a tensile speed of 20 mm/min until the test piece breaks.

Next, the tensile strength is determined based on an equation shown below.

Tensile strength = the load at break / the cross-sectional area of the test piece The cross-sectional area of the test piece is the product of the width (8 mm) of the test piece and the thickness of the test piece.

### <Step (2)>

In the step (2), the second melt-blown nonwoven fabric is obtained by heating the first melt-blown nonwoven fabric.

In the step (2), the first melt-blown nonwoven fabric is heated within a temperature range that is higher than or equal to a temperature that is lower by 10°C than the endothermic start temperature of the resin composition in differential scanning calorimetry, the temperature range being lower than or equal to a temperature that is lower by 10°C than the melting point of the resin composition.

In the step (2), preferably, the first melt-blown nonwoven fabric is heated at a temperature that is higher than or equal to a temperature that is lower by 7°C than the endothermic start temperature of the resin composition in differential scanning calorimetry.

Also in the step (2), preferably, the first melt-blown nonwoven fabric is heated at a temperature that is lower than or equal to a temperature that is lower by 15°C than the melting point of the resin composition.

In the step (2), in a case where the melting point of the resin composition is higher than or equal to 150°C and lower than 160°C, the above temperature range is preferably a range of higher than or equal to 90°C and lower than 150°C.

In the step (2), in a case where the melting point of the resin composition is higher than or equal to 140°C and lower than 150°C, the above temperature range is preferably a range of higher than or equal to 80°C and lower than 140°C.

In the step (2), in a case where the melting point of the resin composition is higher than or equal to 130°C and lower than 140°C, the above temperature range is preferably a range of higher than or equal to 70°C and lower than 130°C.

In the step (2), in a case where the melting point of the resin composition is higher than or equal to 120°C and lower than 130°C, the above temperature range is preferably a range of higher than or equal to 60°C and lower than 120°C.

In the step (2), in a case where the melting point of the resin composition is higher than or equal to 110°C and lower than 120°C, the above temperature range is preferably a range of higher than or equal to 50°C and lower than 110°C.

In the step (2), in a case where the melting point of the resin composition is higher than or equal to 100°C and lower than 110°C, the above temperature range is preferably a range of higher than or equal to 40°C and lower than 100°C.

In the step (2), the first melt-blown nonwoven fabric may be heated by gas having a temperature within the above temperature range.

The gas is, for example, air or inert gas (e.g., nitrogen gas).

A method of heating the first melt-blown nonwoven fabric by the gas having a temperature within the above temperature range is, for example, the following: heating the first melt-blown nonwoven fabric in a heating furnace by the gas having a temperature within the above temperature range, and/or heating the first melt-blown nonwoven fabric by applying the gas having a temperature within the above temperature range to the first melt-blown nonwoven fabric.

In the step (2), the first melt-blown nonwoven fabric may be heated within the above temperature range by sandwiching the first melt-blown nonwoven fabric between a pair of heating rolls.

In the step (2), preferably, the first melt-blown nonwoven fabric is heated within the above temperature range in a non-contact manner.

In the step (2), in the case of heating the first melt-blown nonwoven fabric by sandwiching the first melt-blown nonwoven fabric between the pair of heating rolls, there is a concern that the first melt-blown nonwoven fabric may melt and adhere to the heating rolls.

In the step (2), by heating the first melt-blown nonwoven fabric within the above temperature range in a manner not contacting the heating rolls or the like, the first melt-blown nonwoven fabric can be suppressed from melting and adhering to the heating rolls or the like, which is advantageous.

A method of heating the first melt-blown nonwoven fabric within the above temperature range in a non-contact manner is, for example, a method in which the first melt-blown nonwoven fabric is heated by gas having a temperature within the above temperature range.

In the step (2), within the above temperature range, the first melt-blown nonwoven fabric is heated for preferably 2 to 300 minutes, more preferably 5 to 100 minutes, and more preferably 10 to 50 minutes.

In the step (2), as a result of heating the first melt-blown nonwoven fabric within the above temperature range for at least 2 minutes, the stretchability of the melt-blown nonwoven fabric can readily be further increased.

Also, in the step (2), as a result of heating the first melt-blown nonwoven fabric within the above temperature range for 300 minutes or less, the productivity of the second melt-blown nonwoven fabric is increased.

In the step (2), the first melt-blown nonwoven fabric may be heated in a state where the first melt-blown nonwoven fabric has been wound into a roll.

In the step (2), instead of winding the first melt-blown nonwoven fabric into a roll, the first melt-blown nonwoven fabric may be made sheet-shaped, and the sheet-shaped first melt-blown nonwoven fabric may be heated. For example, the first melt-blown nonwoven fabric in an elongated shape may be heated continuously while being transported.

In the step (2), by cooling the heated first melt-blown nonwoven fabric, the second melt-blown nonwoven fabric is obtained.

A method of cooling the heated first melt-blown nonwoven fabric may be a method in which the heated first melt-blown nonwoven fabric is naturally cooled at normal temperature and normal pressure, or the heated first melt-blown nonwoven fabric is forcedly cooled by applying gas (e.g., normal-temperature gas) to the heated first melt-blown nonwoven fabric.

### <Second Melt-Blown Nonwoven Fabric>

By the method of producing a melt-blown nonwoven fabric according to the present embodiment, the second melt-blown nonwoven fabric can be obtained.

That is, the second melt-blown nonwoven fabric can be obtained by performing the above-described step (1) and step (2).

The tensile elongation at maximum load of the second melt-blown nonwoven fabric in the MD direction is preferably higher than the tensile elongation at maximum load of the first melt-blown nonwoven fabric in the MD direction.

The tensile elongation at maximum load of the second melt-blown nonwoven fabric in the CD direction is preferably higher than the tensile elongation at maximum load of the first melt-blown nonwoven fabric in the CD direction.

The ratio of the tensile elongation at maximum load of the second melt-blown nonwoven fabric in the MD direction to the tensile elongation at maximum load of the first melt-blown nonwoven fabric in the MD direction is preferably greater than or equal to 1.10, and more preferably greater than or equal to 1.20. This ratio is, for example, less than or equal to 3.0, and more specifically less than or equal to 2.5.

This ratio can be increased by increasing the heating temperature in the step (2).

The ratio of the tensile elongation at maximum load of the second melt-blown nonwoven fabric in the CD direction to the tensile elongation at maximum load of the first melt-blown nonwoven fabric in the CD direction is preferably greater than or equal to 1.20, and more preferably greater than or equal to 1.30. This ratio is, for example, less than or equal to 4.0, and more specifically less than or equal to 3.0.

This ratio can be increased by increasing the heating temperature in the step (2).

The tensile elongation at maximum load in the CD direction and that in the MD direction can each be determined by a method described below.

In the method of producing a melt-blown nonwoven fabric according to the present embodiment, the DSC curve of the first melt-blown nonwoven fabric includes two or more endothermic peaks, and the DSC curve of the second melt-blown nonwoven fabric includes two or more endothermic peaks. In a case where, on each DSC curve, among the peak tops of the respective endothermic peaks, the second highest peak top is defined as a second peak top, the height of the second peak top of the second melt-blown nonwoven fabric is preferably greater than the height of the second peak top of the first melt-blown nonwoven fabric.

The ratio of the height of the second peak top of the second melt-blown nonwoven fabric to the height of the second peak top of the first melt-blown nonwoven fabric is preferably greater than or equal to 1.08, and more preferably greater than or equal to 1.10. This ratio is, for example, less than or equal to 2.0, and more specifically less than or equal to 1.7.

This ratio can be increased by increasing the heating temperature in the step (2).

Meanwhile, lowering the heating temperature in the step (2) makes it possible to readily leave the second peak top of the second melt-blown nonwoven fabric.

Each DSC curve can be determined by the above-described differential scanning calorimetry (DSC).

The height of a peak top of a DSC curve herein means the distance between the peak top and the baseline.

The second melt-blown nonwoven fabric is suitably usable as, for example, a material of a filter.

Examples of the filter include a removal filter to remove particles (e.g., particles to which viruses or the like are attached, pollen, etc.) and a blood filter to filter out blood cells (the removal filter is, for example, a filter for a face mask).

The second melt-blown nonwoven fabric is a melt-blown nonwoven fabric having sufficiently high particle filtration efficiency even without being treated to be electrostatically charged.

Preferably, the second melt-blown nonwoven fabric is not treated to be electrostatically charged, because, in this case, the labor hour for the electrostatic charge treatment can be eliminated while increasing the particle filtration efficiency.

It should be noted that the second melt-blown nonwoven fabric may be treated to be electrostatically charged.

Two or more pieces of the second melt-blown nonwoven fabric may be layered together, which may be used as, for example, a material of a filter.

A layered body may be fabricated by layering the second melt-blown nonwoven fabric and a nonwoven fabric including cellulosic fibers.

Examples of the cellulosic fibers include cotton fibers, rayon (a concept encompassing cupra (which is also referred to as "copper ammonia rayon")) fibers, and acetate fibers.

The above layered body has high particle filtration efficiency owing to the second melt-blown nonwoven fabric, and has further increased strength owing to the nonwoven fabric including the cellulosic fibers.

The layered body may be used as a filter.

A face mask may be fabricated to include: a filter for a face mask; and a mask body. Here, the second melt-blown nonwoven fabric serves as the filter for a face mask.

The mask body includes: a pair of ear loops; and a holder that holds the filter for a face mask.

The face mask is configured such that the filter for a face mask is attachable to and detachable from the holder.

### <Melt-Blown Nonwoven Fabric>

Next, a melt-blown nonwoven fabric according to the present embodiment is described.

It should be noted that the descriptions already given for the second melt-blown nonwoven fabric are omitted below, and unless additional descriptions are particularly given for the melt-blown nonwoven fabric according to the present embodiment, it is assumed that the same descriptions as those given for the second melt-blown nonwoven fabric apply below.

The melt-blown nonwoven fabric according to the present embodiment is a melt-blown nonwoven fabric formed from fibers.

The fibers contain a poly(3-hydroxyalkanoate)-based resin.

The DSC curve of the melt-blown nonwoven fabric includes two or more endothermic peaks.

In a case where, among the peak tops of the respective endothermic peaks, the highest peak top is defined as a first peak top and the second highest peak top is defined as a second peak top, the ratio of the height of the second peak top to the height of the first peak top is greater than or equal to 0.57.

The melt-blown nonwoven fabric according to the present embodiment is a heated melt-blown nonwoven fabric.

The melt-blown nonwoven fabric according to the present embodiment can be fabricated, for example, by the method of producing a melt-blown nonwoven fabric according to the present embodiment.

The ratio of the height of the second peak top to the height of the first peak top is preferably 0.58 to 0.95, and more preferably 0.59 to 0.90.

This ratio can be increased by increasing the heating temperature to heat the melt-blown nonwoven fabric.

Meanwhile, lowering the heating temperature to heat the melt-blown nonwoven fabric makes it possible to readily leave the second peak top.

### [Disclosure Items]

The following items each disclose a preferred embodiment.

### [Item 1]

A method of producing a melt-blown nonwoven fabric, the method including obtaining a second melt-blown nonwoven fabric by heating a first melt-blown nonwoven fabric, wherein: the first melt-blown nonwoven fabric is formed from a resin composition containing a poly(3-hydroxyalkanoate)-based resin; and the step of obtaining the second melt-blown nonwoven fabric includes heating the first melt-blown nonwoven fabric within a temperature range higher than or equal to a temperature that is lower by 10°C than an endothermic start temperature of the resin composition in differential scanning calorimetry, the temperature range being lower than or equal to a temperature that is lower by 10°C than a melting point of the resin composition.

### [Item 2]

The method of producing a melt-blown nonwoven fabric according to item 1, wherein in the step of obtaining the second melt-blown nonwoven fabric, the melt-blown nonwoven fabric is heated within the temperature range in a non-contact manner.

### [Item 3]

The method of producing a melt-blown nonwoven fabric according to item 1 or 2, wherein in the step of obtaining the second melt-blown nonwoven fabric, the first melt-blown nonwoven fabric is heated within the temperature range for 2 to 300 minutes.

### [Item 4]

The method of producing a melt-blown nonwoven fabric according to any one of items 1 to 3, wherein the poly(3-hydroxyalkanoate)-based resin includes a homopolymer and/or a copolymer, and includes 80% by mole or more of 3-hydroxybutyrate as a structural unit.

### [Item 5]

The method of producing a melt-blown nonwoven fabric according to any one of items 1 to 4, wherein: a tensile elongation at maximum load of the second melt-blown nonwoven fabric in a MD direction is higher than a tensile elongation at maximum load of the first melt-blown nonwoven fabric in the MD direction; and a tensile elongation at maximum load of the second melt-blown nonwoven fabric in a CD direction is higher than a tensile elongation at maximum load of the first melt-blown nonwoven fabric in the CD direction.

### [Item 6]

The method of producing a melt-blown nonwoven fabric according to any one of items 1 to 5, wherein: a DSC curve of the first melt-blown nonwoven fabric includes two or more endothermic peaks; a DSC curve of the second melt-blown nonwoven fabric includes two or more endothermic peaks; and in a case where, on each DSC curve, among peak tops of the respective endothermic peaks, a second highest peak top is defined as a second peak top, a height of the second peak top of the second melt-blown nonwoven fabric is greater than a height of the second peak top of the first melt-blown nonwoven fabric.

### [Item 7]

A melt-blown nonwoven fabric formed from fibers, wherein: the fibers contain a poly(3-hydroxyalkanoate)-based resin; a DSC curve of the melt-blown nonwoven fabric includes two or more endothermic peaks; and in a case where, among peak tops of the respective endothermic peaks, a highest peak top is defined as a first peak top and a second highest peak top is defined as a second peak top, a ratio of a height of the second peak top to a height of the first peak top is greater than or equal to 0.57.

It should be noted that the present invention is not limited to the above-described embodiment. Also, the present invention is not limited by the above-described functional advantages. Further, various modifications can be made to the present invention without departing from the scope of the present invention.

### Examples

Next, the present invention is described more specifically with Examples, Comparative Examples, and Reference Examples. It should be noted that the present invention is not limited by these Examples in any way.

### <P3HB3HH-0>

Culture production of P3HB3HH as the poly(3-hydroxyalkanoate)-based resin (hereinafter, also referred to as "P3HA-based resin") was performed by using KNK-005 strain (see U.S. Patent No. 7384766).

First, a glycerol stock (50 µL) of KNK-005 strain containing cells was inoculated into a seed medium (10 mL).

Then, the cells were cultured for 24 hours (seed culturing). As a result of the seed culturing, a seed culture solution was obtained.

It should be noted that the composition of the seed medium was: 1 /v% Meat-extract, 1 w/v% Bacto-Tryptone, 0.2 w/v% Yeast-extract, 0.9 w/v% Na₂HPO₄•12H₂O, and 0.15 w/v% KH₂PO₄ (pH 6.8).

Next, the resulting seed culture solution was inoculated into a preculture medium (1.8 L) (the amount of the seed culture solution / the amount of the preculture medium: 1.0 v/v%) in ajar fermenter (MDL-300, Volume: 3L, available from B. E. MARUBISHI Co., Ltd.).

Then, the cells were cultured for 28 hours (preculturing). As a result of the preculturing, a preculture solution was obtained.

It should be noted that the preculturing was performed under the conditions indicated below.
Culturing temperature: 33°C
Stirring speed: 500 rpm
Ventilation volume: 1.8 L/min
pH: 6.7 to 6.8.

For pH control, a 14 wt% aqueous ammonium hydroxide solution was used.

The composition of the preculture medium was: 1.1 w/v% Na₂HPO₄•12H₂O, 0.19 w/v% KH₂PO₄, 1.29 w/v% (NH₄)₂SO₄, 0.1 w/v% MgSO₄•7H₂O, and 0.5 v/v% trace metal salt solution (prepared by dissolving, in 0.1 N hydrochloric acid, 1.6 w/v% FeCl₃•6H₂O, 1 w/v% CaCl₂•2H₂O, 0.02 w/v% CoCl₂•6H₂O, 0.016 w/v% CuSO₄•5H₂O, and 0.012 w/v% NiCl₂•6H₂O). Palm oil as a carbon source was added to the preculture medium at 10 g/L.

Next, the resulting preculture solution was inoculated into a production medium (6 L) (the amount of the preculture solution / the amount of the production medium: 1.0 v/v%) in a jar fermenter (MDS-1000, Volume: 10L, available from B. E. MARUBISHI Co., Ltd.).

Then, the cells were cultured for 64 hours (production culturing). As a result of the production culturing, a production culture solution was obtained.

It should be noted that the production culturing was performed under the conditions indicated below.
Culturing temperature: 28°C
Stirring speed: 400 rpm
Ventilation volume: 6.0 L/min
pH: 6.7 to 6.8

For pH control, a 14 wt% aqueous ammonium hydroxide solution was used.

The composition of the production medium was: 0.385 w/v% Na₂HPO₄•12H₂O, 0.067 w/v% KH₂PO₄, 0.291 w/v% (NH₄)₂SO₄, 0.1 w/v% MgSO₄•7H₂O, 0.5 v/v% trace metal salt solution (prepared by dissolving, in 0.1 N hydrochloric acid, 1.6 w/v% FeCl₃•6H₂O, 1 w/v% CaCl₂•2H₂O, 0.02 w/v% CoCl₂•6H₂O, 0.016 w/v% CuSO₄•5H₂O, and 0.012 w/v% NiCl₂•6H₂O), and 0.05 w/v% BIOSPUREX200K (defoaming agent: available from Cognis Japan Ltd.). Palm oil as a carbon source was added to the production medium at 10 g/L.

Next, the cells were collected from the production culture solution by centrifugal separation. Then, the collected cells were washed with methanol, and the washed cells were lyophilized. In this manner, dry cells were obtained.

Subsequently, 100 mL of chloroform was added to 1 g of the dry cells, and the mixture of the dry cells and the chloroform was stirred at room temperature all day and night to dissolve P3HB3HH contained in the dry cells into the chloroform, and thereby a P3HB3HH solution containing the cell residue was obtained.

Thereafter, the cell residue was removed from the P3HB3HH solution by filtration.

Next, the chloroform in the P3HB3HH solution was evaporated by an evaporator until the total volume of the P3HB3HH solution, from which the cell residue had been removed, became 30 mL, and thereby a concentrate was obtained.

Then, 90 mL of hexane was gradually added to the concentrate, and the concentrate and hexane were gently stirred together to obtain a mixture, and the mixture was left stand for 1 hour to deposit P3HB3HH in the mixture.

The mixture was filtered to separate P3HB3HH therefrom, and then the separated P3HB3HH was vacuum-dried at 50°C for 3 hours. In this manner, P3HB3HH-0 (also referred to as "P3HA-0") as the P3HA-based resin was obtained.

### <P3HB3HH-1>

A highly accelerated stress test chamber (EHS-222MD available from ESPEC Corp.) was used to subject the P3HB3HH-0 to treatment under the condition of high temperature and high humidity (temperature: 120°C, humidity: 100%) for 5.5 hours, and thereby P3HB3HH-1 (also referred to as "P3HA-1") as the P3HA-based resin was obtained.

The content of 3-hydroxyhexanoate (3HH) as a structural unit in P3HA-1 was 5.5% by mole.

Also, the content of 3-hydroxybutyrate as a structural unit in P3HA-1 was 94.5% by mole.

It should be noted that the content of 3-hydroxybutyrate as a structural unit in P3HB3HH, and the content of 3-hydroxyhexanoate (3HH) as a structural unit in P3HB3HH, were determined in a manner as described below.

First, 2 mL of a mixed solution of sulfuric acid and methanol (the volume of sulfuric acid : the volume of methanol = 15 : 85) and 2 mL of chloroform were added to 20 mg of P3HB3HH. The resulting sample was placed in a container, and the container was sealed. The sample in the sealed container was heated at 100°C for 140 minutes, and thereby a first reaction solution was obtained, the first reaction solution containing a methyl ester that was a P3HB3HH degradation product.

Then, the first reaction solution was cooled, and 1.5 g of sodium hydrogen carbonate was added to the cooled first reaction solution little by little for neutralization. The resulting mixture was left stand until generation of carbon dioxide stopped. In this manner, a second reaction solution was obtained.

Further, 4 mL of diisopropyl ether was added and mixed well with the second reaction solution, and then the resulting mixture was subjected to centrifugal separation. In this manner, a supernatant solution was obtained.

Then, the monomer unit composition of a polyester degradation product in the supernatant solution was analyzed by capillary gas chromatography under the conditions indicated below, and thereby the content of 3-hydroxyhexanoate (3HH) as a structural unit in P3HB3HH was determined.
Gas chromatograph: GC-17A available from Shimadzu Corporation
Capillary column: NEUTRA BOND-1 (column length: 25 m, column inner diameter: 0.25 mm, liquid film thickness: 0.4 µm) available from GL Sciences Inc.
Carrier gas: He
Column inlet pressure: 100 kPa
Sample amount: 1 µL

As the temperature condition, the temperature was raised from 100°C to 200°C at the rate of 8 °C/min, and then raised from 200°C to 290°C at the rate of 30 °C/min.

Then, based on the value of the content of 3-hydroxyhexanoate (3HH) as a structural unit in P3HB3HH, the content of 3-hydroxybutyrate as a structural unit in P3HB3HH was determined.

### (Raw Material Composition)

The above-described P3HA-1, the below-described BA as a lubricant, the below-described EA as a lubricant, and the below-described PETL as a crystal nucleating agent were mixed together with a blending ratio shown in Table 1 below, and thereby a raw material composition was obtained.
BA: Behenic acid amide (BNT-22H available from Nippon Fine Chemical Co., Ltd.)
EA: Erucic acid amide (NEUTRON-S available from Nippon Fine Chemical Co., Ltd.)
PETL: Pentaerythritol (Neulizer P available from Taiseikayaku Co., Ltd.)

### (Measurement of physical properties of the raw material composition)

The melt mass-flow rate (MFR) at 160°C and the weight-average molecular weight (Mw) of the raw material composition were measured.

The measurement values are shown in Table 1 below.

**[Table 1]**

| Blending ratio in the raw material composition | | | | Physical properties of the raw material composition | |
|---|---|---|---|---|---|
| P3HA-1 | Lubricant | | Crystal nucleating agent | Mw (x 10⁴) | MFR at 160°C (g/10min) |
| Amount (parts by weight) | Amount of BA (parts by weight) | Amount of EΛ (parts by weight) | Amount of PETL (parts by weight) | | |
| 100 | 0.5 | 0.5 | 1.5 | 19.0 | 130 |

With use of the melt-blown nonwoven fabric producing apparatus shown in FIGS. 1 to 3, the first melt-blown nonwoven fabric was produced from the raw material composition by melt-blown technique under the conditions shown in Table 2 below.

**[Table 2]**

| Extruder | Gear pump | Nozzle | | | Gas (air) applied to fibrous molten kneaded product | | | DCD | Conveyor belt |
|---|---|---|---|---|---|---|---|---|---|
| Temperature | Rotation speed | Nozzle hole diameter | Number of nozzle holes | Space | Pressure | Flow rate | Temperature | | Moving speed |
| °C | rpm | mm | Number of holes | mm | MPa | NL/min/m | °C | mm | m/min |
| 165 | 15 | 0.15 | 1207 | 0.35 | 0.18 | 10233 | 177 | 100 | 1.3 |

### (Measurement of physical properties of the first melt-blown nonwoven fabric)

For the first melt-blown nonwoven fabric obtained by melt-blown technique, the areal weight, the thickness, the average value of the fiber diameter of the fibers, the average pore diameter, the weight-average molecular weight (Mw) of the resin composition, and the melt mass-flow rate (MFR) of the resin composition at 160°C were measured.

The measurement values are shown in Table 3 below.

**[Table 3]**

| Physical properties of the first melt-blown nonwoven fabric | | | | | | |
|---|---|---|---|---|---|---|
| Areal weight | Thickness | Fiber diameter of fibers | | Average pore diameter | Resin composition | |
| | | Average value | Coefficient of variation | | Mw | MFR at 160°C |
| g/m² | mm | µm | - | µm | x 10⁴ | g/10min |
| 63 | 0.29 | 2.6 | 0.15 | 5.2 | 15.5 | 263 |

### (Examples and Comparative Examples)

With use of a hot-blast dryer of a compartment type (PH-202 available form ESPEC Corp.), the second melt-blown nonwoven fabric of each Example and that of each Comparative Example were obtained in the following manner: heating the first melt-blown nonwoven fabric in a rolled state (the first melt-blown nonwoven fabric 14 days after the production thereof) at a heating temperature specified in Table 4 or 5 below for 20 minutes; and then naturally cooling the heated first melt-blown nonwoven fabric at normal temperature and normal pressure (20°C, 1 atm), thereby obtaining the second melt-blown nonwoven fabric.

It should be noted that, in Comparative Example 1, the first melt-blown nonwoven fabric 14 days after the production thereof was defined as the second melt-blown nonwoven fabric.

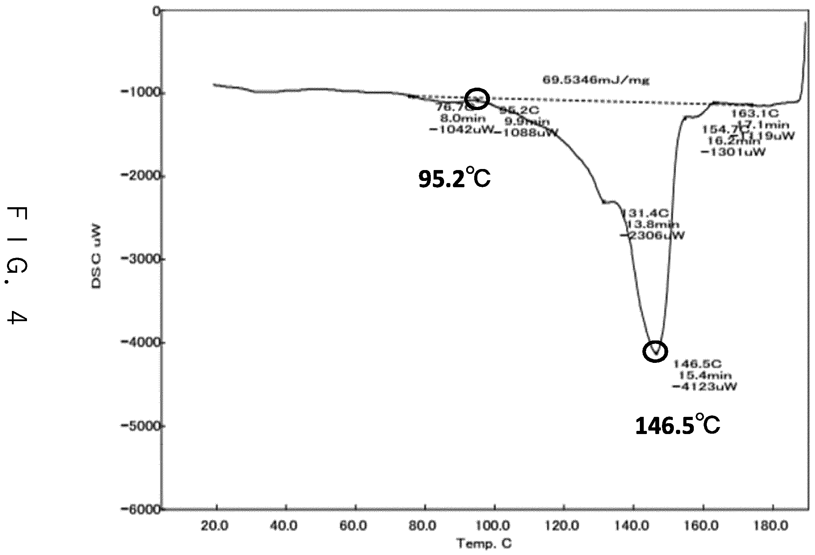

Differential scanning calorimetry (DSC) was performed on the resin composition of the first melt-blown nonwoven fabric used in each Example. FIG. 4 shows a DSC curve obtained from the differential scanning calorimetry.

The endothermic start temperature of the resin composition in the differential scanning calorimetry was 95.2°C. That is, the temperature lower by 10°C than the endothermic start temperature of the resin composition was 85.2°C.

The melting point of the resin composition was 146.5°C. That is, the temperature lower by 10°C than the melting point of the resin composition was 136.5°C.

### (Maximum load (strength) and stretchability of the second melt-blown nonwoven fabric in the MD direction)

The maximum load and the stretchability (i.e., tensile elongation at maximum load) of the second melt-blown nonwoven fabric in the MD direction were measured.

It should be noted that the maximum load and the stretchability in the MD direction were measured by using a constant rate extension type tensile test machine that accords with JIS B7721:2018 "Tension/compression testing machines - Calibration and verification of the force-measuring system".

It should be noted that, as the constant rate extension type tensile test machine, a universal tester (RTG-1210 available from A&D Company, Limited) or the like was used.

First, a test piece (width: 8 mm, length: 40 mm) was cut out from the second melt-blown nonwoven fabric.

Next, the test piece with an initial load applied thereto was attached to the tensile test machine, i.e., gripped by grips of the tensile test machine, with the length of the test piece between the grips being 20 mm. Here, the initial load was applied to the test piece by pulling the test piece by hand to such an extent that sagging did not occur.

Then, a load was applied to the test piece at a tensile speed of 20 mm/min until the test piece broke, and the maximum load and the stretchability of the test piece in the MD direction were measured.

It should be noted that the stretchability (tensile elongation at maximum load) was determined based on an equation shown below. Tensile elongation at maximum load (%) = [(the length of the test piece between the grips at maximum load - the length of the test piece between the grips at initial load) / the length of the test piece between the grips at initial load] × 100 (%)

### (Viral filtration efficiency of the second melt-blown nonwoven fabric)

For each second melt-blown nonwoven fabric, viral filtration efficiency (VFE) was measured. The viral filtration efficiency was measured in accordance with JIS T9001:2021 "Performance requirements and test methods of medical face masks and non-medical face masks".

### (Thermal shrinkage of the melt-blown nonwoven fabric)

With use of a hot-blast dryer of a compartment type (PH-202 available from ESPEC Corp.), the second melt-blown nonwoven fabric of each Example and that of each Comparative Example were obtained in the following manner: heating the first melt-blown nonwoven fabric (a square piece of 10 cm × 10 cm) at a heating temperature specified in Table 4 below for 20 minutes; and then naturally cooling the heated first melt-blown nonwoven fabric at normal temperature and normal pressure (20°C, 1 atm), thereby obtaining the second melt-blown nonwoven fabric.

Next, the dimensions of the second melt-blown nonwoven fabric were measured.

Then, thermal shrinkage was calculated based on an equation shown below. Thermal shrinkage (%) = (the area of the first melt-blown nonwoven fabric - the area of the second melt-blown nonwoven fabric) ÷ the area of the first melt-blown nonwoven fabric × 100

The results are shown in Table 4 below.

**[Table 4]**

| | EX. 1 | EX. 2 | EX. 3 | Comp. Ex. 1 | Comp. Ex. 2 | Comp. Ex. 3 |
|---|---|---|---|---|---|---|
| Heating temperature (°C) | 130 | 110 | 90 | No heating | 70 | 140 |
| Stretchability (%) in MD direction | 47.5 | 32.2 | 26.9 | 18.7 | 19.0 | 49.1 |
| Maximum load (N) in MD direction | 6.1 | 5.6 | 5.5 | 5.3 | 5.6 | 6.5 |
| Thermal shrinkage (%) | 2.1 | 0.7 | 1.2 | - | 0.2 | 5.7 |
| VFE (%) | 96.4 | - | - | 96.1 | - | - |

As shown in Table 4, the stretchability of the second melt-blown nonwoven fabrics obtained by the production methods of Examples 1 to 3, which fall within the scope of the present invention, was higher than the stretchability of the second melt-blown nonwoven fabrics obtained by the production method of Comparative Example 1, in which the first melt-blown nonwoven fabric was not heated, and the production method of Comparative Example 2, in which the heating temperature was 70°C.

As shown in Table 4, in the production methods of Examples 1 to 3, which fall within the scope of the present invention, the thermal shrinkage of the melt-blown nonwoven fabric was less than in the production method of Comparative Example 3, in which the heating temperature was 140°C.

Thus, the present invention makes it possible to increase the stretchability of a melt-blown nonwoven fabric formed from fibers containing a poly(3-hydroxyalkanoate)-based resin, as well as to suppress thermal contraction of the melt-blown nonwoven fabric.

### (Height of the first peak top and that of the second peak top)

A height A of the first peak top and a height B of the second peak top of the second melt-blown nonwoven fabric (the melt-blown nonwoven fabric) were measured by the aforementioned method.

The height of the second peak top to the height of the first peak top (B / A) was calculated.

Further, the ratio of the height B of the second peak top of the second melt-blown nonwoven fabric to the height B of the second peak top of the first melt-blown nonwoven fabric (hereinafter, this ratio may be simply referred to as "ratio of B") was calculated.

The measurement values and calculation values are shown in Table 5 below.

### (Stretchability in MD direction and that in CD direction)

The stretchability (i.e., tensile elongation at maximum load) of the second melt-blown nonwoven fabric (the melt-blown nonwoven fabric) in the MD direction and that in the CD direction were measured.

It should be noted that, except in the tensile direction, the stretchability in the CD direction was measured with the same method as the above-described method to measure the stretchability in the MD direction.

The ratio of the stretchability of the second melt-blown nonwoven fabric in the MD direction to the stretchability of the first melt-blown nonwoven fabric in the MD direction (hereinafter, this ratio may be simply referred to as "ratio of MD direction stretchability") was calculated.

Further, the ratio of the stretchability of the second melt-blown nonwoven fabric in the CD direction to the stretchability of the first melt-blown nonwoven fabric in the CD direction (hereinafter, this ratio may be simply referred to as "ratio of CD direction stretchability") was calculated.

The measurement values and calculation values are shown in Table 5 below.

**[Table 5]**

| | Heating temp. [°C] | Heating time [min] | First peak top height A [µW] | Second peak top height B [µW] | Ratio of B [-] | B / A [-] | MD direction stretchability [%] | Ratio of MD direction stretchability [-] | CD direction stretchability [%] | Ratio of CD direction stretchability [-] |
|---|---|---|---|---|---|---|---|---|---|---|
| Comp. Ex 1 | 25 | - | 4,123 | 2,306 | - | 0.56 | 32.2 | - | 18.7 | - |
| Comp. Ex 2 | 70 | 20 | 4,420 | 2,456 | 1.07 | 0.56 | 31.6 | 0.98 | 19.0 | 1.02 |
| Ex. 3 | 90 | 20 | - | - | - | - | 40.9 | 1.27 | 26.9 | 1.44 |
| Ex. 2 | 110 | 20 | 4,208 | 2,585 | 1.12 | 0.61 | 56.5 | 1.75 | 32.2 | 1.72 |
| Ex. 4 | 120 | 20 | 4,697 | 3,107 | 1.35 | 0.66 | 59.3 | 1.84 | 42.2 | 2.26 |
| Ex. 5 | 125 | 20 | 3,954 | 2,950 | 1.28 | 0.75 | 55.5 | 1.72 | 43.9 | 2.35 |
| Ex. 1 | 130 | 20 | 4,116 | 3,346 | 1.45 | 0.81 | 62.9 | 1.95 | 47.5 | 2.54 |
| Ex. 6 | 135 | 20 | - | - | - | - | 56.4 | 1.75 | 42.3 | 2.26 |
| Comp. Ex 3 | 140 | 20 | 5,507 | Absent | - | - | 55.3 | 1.72 | 49.1 | 2.62 |
| Comp. Ex 4 | 145 | 20 | 6,335 | Absent | - | - | 66.5 | 2.06 | 48.2 | 2.58 |

As shown in Table 5, in Examples 1, 2, 4, and 5, which fall within the scope of the present invention (and in which B / A was greater than or equal to 0.57), the stretchability of the melt-blown nonwoven fabric in the MD direction and that in the CD direction were higher than in Comparative Examples 1 and 2, in which the height of the second peak top to the height of the first peak top (B / A) was 0.56.

Further, as shown in Tables 4 and 5, in Examples 1 and 2, which fall within the scope of the present invention (and in which B / A was greater than or equal to 0.57), the thermal shrinkage of the melt-blown nonwoven fabric was less than in Comparative Example 3 having only one endothermic peak.

Thus, the present invention makes it possible to provide a melt-blown nonwoven fabric formed from fibers containing a poly(3-hydroxyalkanoate)-based resin, the melt-blown nonwoven fabric having high stretchability and less thermal contraction.

### Reference Signs List

1: melt-blown nonwoven fabric producing apparatus, 2: hopper, 3: extruder, 4: gear pump, 5: filter, 6: kneader, 7: nozzle, 7a: nozzle hole, 8: collector, 8a: conveyor belt, 8b: roller, 9: winder, A: kneaded product, B: first melt-blown nonwoven fabric, C: gas

## Claims

1. A method of producing a melt-blown nonwoven fabric, the method comprising obtaining a second melt-blown nonwoven fabric by heating a first melt-blown nonwoven fabric, wherein:
the first melt-blown nonwoven fabric is formed from a resin composition containing a poly(3-hydroxyalkanoate)-based resin; and
the step of obtaining the second melt-blown nonwoven fabric includes heating the first melt-blown nonwoven fabric within a temperature range higher than or equal to a temperature that is lower by 10°C than an endothermic start temperature of the resin composition in differential scanning calorimetry, the temperature range being lower than or equal to a temperature that is lower by 10°C than a melting point of the resin composition.

2. The method of producing a melt-blown nonwoven fabric according to claim 1, wherein
in the step of obtaining the second melt-blown nonwoven fabric, the melt-blown nonwoven fabric is heated within the temperature range in a non-contact manner.

3. The method of producing a melt-blown nonwoven fabric according to claim 1 or 2, wherein
in the step of obtaining the second melt-blown nonwoven fabric, the first melt-blown nonwoven fabric is heated within the temperature range for 2 to 300 minutes.

4. The method of producing a melt-blown nonwoven fabric according to claim 1 or 2, wherein
the poly(3-hydroxyalkanoate)-based resin includes a homopolymer and/or a copolymer, and includes 80% by mole or more of 3-hydroxybutyrate as a structural unit.

5. The method of producing a melt-blown nonwoven fabric according to claim 1 or 2, wherein:
a tensile elongation at maximum load of the second melt-blown nonwoven fabric in a MD direction is higher than a tensile elongation at maximum load of the first melt-blown nonwoven fabric in the MD direction; and
a tensile elongation at maximum load of the second melt-blown nonwoven fabric in a CD direction is higher than a tensile elongation at maximum load of the first melt-blown nonwoven fabric in the CD direction.

6. The method of producing a melt-blown nonwoven fabric according to claim 1 or 2, wherein:
a DSC curve of the first melt-blown nonwoven fabric includes two or more endothermic peaks;
a DSC curve of the second melt-blown nonwoven fabric includes two or more endothermic peaks; and
in a case where, on each DSC curve, among peak tops of the respective endothermic peaks, a second highest peak top is defined as a second peak top, a height of the second peak top of the second melt-blown nonwoven fabric is greater than a height of the second peak top of the first melt-blown nonwoven fabric.

7. A melt-blown nonwoven fabric formed from fibers, wherein:
the fibers contain a poly(3-hydroxyalkanoate)-based resin;
a DSC curve of the melt-blown nonwoven fabric includes two or more endothermic peaks; and
in a case where, among peak tops of the respective endothermic peaks, a highest peak top is defined as a first peak top and a second highest peak top is defined as a second peak top, a ratio of a height of the second peak top to a height of the first peak top is greater than or equal to 0.57.
